# EUROPEAN PATENT SPECIFICATION

(11) **EP 3 257 671 B1**
(45) Date of publication and mention of the grant of the patent: **03.04.2019**
(21) Application number: 17175513.5
(22) Date of filing: 12.06.2017
(51) Int. Cl.: B32B 37/12, B32B 38/08, B32B 27/10, B65D 65/02

(54) **LAMINATED MATERIAL FOR PACKAGES AND METHOD FOR ITS MANUFACTURE**
LAMINIERTES MATERIAL FÜR VERPACKUNGEN UND VERFAHREN ZUR DESSEN HERSTELLUNG
MATÉRIAU LAMINÉ POUR EMBALLAGES ET PROCÉDÉ POUR SA FABRICATION

(30) Priority: 17.06.2016 IT UA20164482
(43) Date of publication of application: 20.12.2017
(73) Proprietor: Masterpack S.p.A., 21020 Monvalle (IT)
(72) Inventor: BINDA, Valerio, 21020 Monvalle (IT)
(74) Representative: Pizzoli, Antonio

(56) References cited:
- US-A- 4 464 220
- US-A1- 2007 054 117

## Description

### TECHNICAL FIELD

The present description relates to a laminated material for packages, in particular for food use. The present description also relates to a method for the manufacture of such laminated material.

### BACKGROUND OF THE DESCRIPTION

Known laminated materials for packages comprise a sheet of paper laminated with a solid film of plastic material. The sheet of paper and the film are generally wound in tapes, so as the laminated material after their coupling, which is carried out by interposing an adhesive.

Packages made with such laminated material are not recyclable as the paper is not separable at the time of sorting in the disposal facilities. In fact, the paper, being very porous, absorbs any liquid that is poured over it, including the adhesive used in the lamination, which penetrates almost completely into the paper fibers, thus preventing the subsequent separation from the plastic material.

US 4464220 and US 2007/0054117 A1 disclose manufacturing methods and laminated materials in which a sheet of paper and a film are intimately bonded by means of a heat-sealable adhesive, so after the lamination the paper is no longer separable from the film without reactivating the adhesive.

### SUMMARY OF THE DESCRIPTION

Object of the present description is therefore to provide a laminated material free from such drawbacks. Said object is achieved with a laminated material and a manufacturing method whose main features are specified in the appended claims.

Thanks to the particular lamination method according to the present description, the paper of the laminated material thus obtained can be easily separated from the plastic film by immersing it in water and by the consequent pulping of the paper fibers, as the dried heat-sealable adhesive applied to the film prior to the lamination penetrates only for a minimum thickness in the paper fibers during the lamination.

Preferably, the heat-sealable adhesive is an aqueous solution, so as to improve paper separation during recycling.

The method according to the present description can advantageously be carried out in two distinct operative steps, so that each step can be performed in different places, for example in two different production sites.

### BRIEF DESCRIPTION OF THE DRAWINGS

Further advantages and features of the laminated material and of the method according to the present description will be apparent to those skilled in the art from the following detailed and non-limiting description of some embodiments thereof. with reference to the accompanying drawings in which:
- Figure 1 shows a schematic view of a first step of the manufacturing method;
- Figure 2 shows a schematic view of a second step of the manufacturing method of Figure 1;
- Figure 3 shows a partial and enlarged section view of the laminated material;
- Figure 4 shows a schematic view of an alternative embodiment of the manufacturing method.

### EXPLANATORY EMBODIMENTS

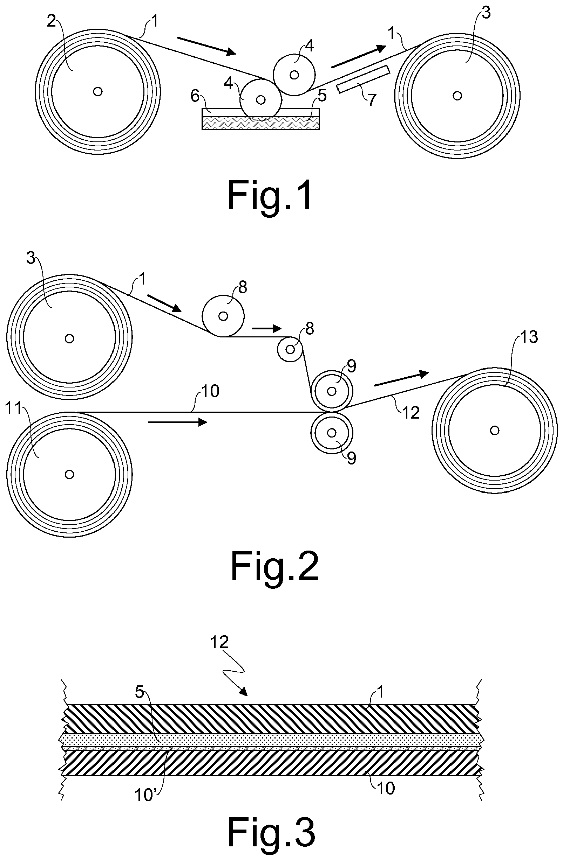

Referring to Figure 1, it is seen that in a first operative step of the manufacturing method, a film 1 of plastic material preferably wound on a first roller 2 is pulled in the direction of the arrows towards a second roller 3. Before being wound on the second roller 3, one or more auxiliary rollers 4 apply on at least one side of the film 1 at least one layer of liquid heat-sealable adhesive 5 which is taken by the auxiliary roller 4 from a tub 6 to be applied by these on one side of the film 1, in particular the bottom side in the figure. A heating device 7 dries the heat-sealable adhesive 5, in particular at a temperature between 30° and 160° C, on the film 1 before the latter is wound on the second roller 3. In alternative embodiments, the heat-sealable adhesive 5 can be applied by a rotogravure or flexographic process, with devices and methods similar to those used for rotogravure or flexographic printing.

Referring to Figure 2, it is seen that in a second operating step of the manufacturing method, the film 1 provided with the dried heat-sealable adhesive 5 and wound on the second roller 3 is pulled in the direction of the arrows by auxiliary rollers 8. One or more heated rollers 9 activate the heat-sealable adhesive 5 on film 1 and at the same time laminate, preferably at a pressure of 3 to 5 bar and/or a temperature between 80° and 140° C, the film 1 with a sheet of paper 10 preferably wound on a third roller 11, so as to obtain a laminated material 12 which can be wound on a fourth roller 13.

Referring to Figure 3, it can be seen that the paper sheet 10 of the laminated product 12 can have a basis weight of between 10 and 200 g/sqm and can also be coupled, on the side opposite to the film 1, to a further sheet made also with other materials, such as plastic material. During lamination, the heat-sealable adhesive 5 is disposed between the film 1 and the paper sheet 10 and partly impregnates the latter so as to form a layer 10' facing the film 1, which includes the heat-sealable adhesive 5 and has a thickness not greater than 20 microns, notably not greater than 20% of the total thickness of the sheet of paper 10. The heat-sealable adhesive 5 is applied on film 1 in an amount of between 1 and 40 g/sqm, particularly between 1 and 10 g/sqm of adhesive in the liquid state, which, once dried, substantially halves its weight. In particular, the heat-sealable adhesive 5 is an aqueous solution, for example based on ethylene/acrylic acid (EAA) like the DH 336 adhesive of the firm Collano. Preferably, the film 1 is made of polypropylene with a thickness of between 10 and 200 microns, in particular between 20 and 30 microns.

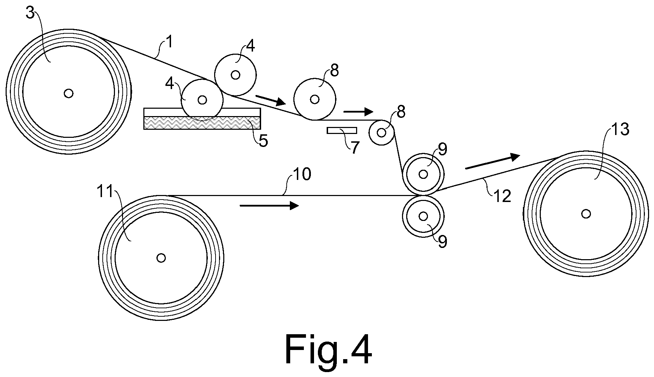

Referring to Figure 4, it is seen that in an alternative embodiment of the manufacturing method, the two operating steps described above for the first embodiment are carried out in sequence, i.e. the film 1 is laminated with the sheet 10 to produce the laminated material 12 shortly after the heat-sealable adhesive 5 applied to the film 1 is dried.

## Claims

1. Method for manufacturing laminated materials (12), which comprises the following operating steps:
- applying at least one layer of liquid heat-sealable adhesive (5) on at least one side of a film (1) made of plastic material;
- drying the liquid heat-sealable adhesive (5);
- laminating the film (1) provided with the dried heat-sealable adhesive with at least one sheet of paper (10), wherein during this lamination the heat-sealable adhesive (5) is activated and is arranged between the film (1) and the sheet of paper (10),
**characterized in that** the heat-sealable adhesive (5) partially impregnates the sheet of paper (10) so as to form a layer (10') which faces the film (1) and has a thickness not greater than 20 microns.

2. Method according to the preceding claim, **characterized in that** the liquid heat-sealable adhesive (5) is dried by a heating device (7) at a temperature comprised between 30° and 160° C.

3. Method according to one of the preceding claims, **characterized in that** the film (1) and the sheet of paper (10) are laminated with a pressure comprised between 3 and 5 bar.

4. Method according to one of the preceding claims, **characterized in that** the film (1) and the sheet of paper (10) are laminated at a temperature comprised between 80° and 140° C.

5. Method according to one of the preceding claims, **characterized in that** the film (1) provided with the dried heat-sealable adhesive is wound on a roller (3) before being laminated with the sheet of paper (10).

6. Laminated material (12) comprising at least one film (1) made of plastic material laminated with at least one sheet of paper (10) through at least one layer of heat-sealable adhesive (5) arranged between the film (1) and the sheet of paper (10), **characterized in that** the heat-sealable adhesive (5) partially impregnates the sheet of paper (10) so as to form a layer (10') which faces the film (1) and has a thickness not greater than 20 microns.

7. Method or laminated material (12) according to one of the preceding claims, **characterized in that** the layer (10') of heat-sealable adhesive (5) which partially impregnates the sheet of paper (10) has a thickness not greater than 20% of the total thickness of the sheet of paper (10).

8. Method or laminated material (12) according to one of the preceding claims, **characterized in that** the heat-sealable adhesive (5) is applied on the film (1) in an amount comprised between 1 and 40 g/sqm, in particular between 1 and 10 g/sqm, in the liquid state.

9. Method or laminated material (12) according to one of the preceding claims, **characterized in that** the heat-sealable adhesive (5) is an aqueous solution.

10. Method or laminated material (12) according to the preceding claim, **characterized in that** the heat-sealable adhesive (5) is an aqueous solution based on ethylene/acrylic acid.

11. Method or laminated material (12) according to one of the preceding claims, **characterized in that** the film (1) is made of polypropylene.

12. Method or laminated material (12) according to one of the preceding claims, **characterized in that** the film (1) has a thickness comprised between 10 and 200 microns, in particular between 20 and 30 microns.

13. Method or laminated material (12) according to one of the preceding claims, **characterized in that** the basis weight of the paper sheet (10) is comprised between 10 and 200 g/sqm.

## Patentansprüche

1. Verfahren zur Herstellung von laminierten Materialien, welches die folgenden Arbeitsschritte umfasst:
- Aufbringen von wenigstens einer Schicht eines flüssigen heißsiegelfähigen Klebstoffs (5) auf wenigstens einer Seite einer Folie (1) aus einem Kunststoffmaterial;
- Trocknen des flüssigen heißsiegelfähigen Klebstoffs (5);
- Laminieren der mit dem getrockneten heißsiegelfähigen Klebstoff versehenen Folie (1) mit wenigstens einem Papierbogen (10), wobei der heißsiegelfähige Klebstoff (5) während des Laminierens aktiviert ist und sich zwischen der Folie (1) und dem Papierbogen (10) befindet,
**dadurch gekennzeichnet, dass** der heißsiegelfähige Klebstoff (5) den Papierbogen (10) zum Teil durchtränkt, um eine Schicht (10') zu bilden, die der Folie (1) zugewandt ist und eine Dicke aufweist, die nicht größer ist als 20 Mikrometer.

2. Verfahren gemäß dem vorangehenden Anspruch, **dadurch gekennzeichnet, dass** der flüssige heißsiegelfähige Klebstoff (5) von einer Heizvorrichtung (7) bei einer Temperatur zwischen 30° und 160° C getrocknet wird.

3. Verfahren gemäß einem der vorangehenden Ansprüche, **dadurch gekennzeichnet, dass** die Folie (1) und der Papierbogen (10) mit einem Druck zwischen 3 und 5 bar laminiert werden.

4. Verfahren gemäß einem der vorangehenden Ansprüche, **dadurch gekennzeichnet, dass** die Folie (1) und der Papierbogen (10) bei einer Temperatur zwischen 80° und 140° C laminiert werden.

5. Verfahren gemäß einem der vorangehenden Ansprüche, **dadurch gekennzeichnet, dass** die mit dem getrockneten heißsiegelfähigen Klebstoff versehene Folie (1) auf eine Rolle (3) gewickelt wird, bevor sie mit dem Papierbogen (10) laminiert wird.

6. Laminiertes Material (12), umfassend wenigstens eine Folie (1) aus winwm Kunststoffmaterial, die mit wenigstens einem Papierbogen (10) laminiert ist durch wenigstens eine Schicht eines heißsiegelfähigen Klebstoffs (5), die sich zwischen der Folie (1) und dem Papierbogen (10) befindet, **dadurch gekennzeichnet, dass** der heißsiegelfähige Klebstoff (5) den Papierbogen (10) zum Teil durchtränkt, um eine Schicht (10') zu bilden, die der Folie (1) zugewandt ist und eine Dicke aufweist, die nicht größer ist als 20 Mikrometer.

7. Verfahren oder laminiertes Material (12) gemäß einem der vorangehenden Ansprüche, **dadurch gekennzeichnet, dass** die Schicht (10') des heißsiegelfähigen Klebstoffs (5), der den Papierbogen (10) teilweise durchtränkt, eine Dicke aufweist, die nicht größer ist als 20% der Gesamtdicke des Papierbogens (10).

8. Verfahren oder laminiertes Material (12) gemäß einem der vorangehenden Ansprüche, **dadurch gekennzeichnet, dass** der heißsiegelfähige Klebstoff (5) in flüssigem Zustand in einer Menge zwischen 1 und 40 g/m², insbesondere zwischen 1 und 10 g/m², auf die Folie (1) aufgetragen wird.

9. Verfahren oder laminiertes Material (12) gemäß einem der vorangehenden Ansprüche, **dadurch gekennzeichnet, dass** der heißsiegelfähige Klebstoff (5) eine wässrige Lösung ist.

10. Verfahren oder laminiertes Material (12) gemäß dem vorangehenden Anspruch, **dadurch gekennzeichnet, dass** der heißsiegelfähige Klebstoff (5) eine wässrige Lösung auf der Basis von Ethylen/Acrylsäure ist.

11. Verfahren oder laminiertes Material (12) gemäß einem der vorangehenden Ansprüche, **dadurch gekennzeichnet, dass** die Folie (1) aus Polypropylen besteht.

12. Verfahren oder laminiertes Material (12) gemäß einem der vorangehenden Ansprüche, **dadurch gekennzeichnet, dass** die Folie (1) eine Dicke zwischen 10 und 200 Mikrometer aufweist, insbesondere zwischen 20 und 30 Mikrometer.

13. Verfahren oder laminiertes Material (12) gemäß einem der vorangehenden Ansprüche, **dadurch gekennzeichnet, dass** das Flächengewicht des Papierbogens (10) zwischen 10 und 200 g/m² liegt.

## Revendications

1. Procédé pour fabriquer des matériaux stratifiés (12), qui comprend les étapes opérationnelles suivantes :
- application d'au moins une couche d'adhésif thermoscellable liquide (5) sur au moins un côté d'un film (1) fait d'une matière plastique ;
- séchage de l'adhésif thermoscellable liquide (5) ;
- stratification du film (1) doté de l'adhésif thermoscellable séché avec au moins une feuille de papier (10) où, durant cette stratification, l'adhésif thermoscellable (5) est activé et est agencé entre le film (1) et la feuille de papier (10),
**caractérisé en ce que** l'adhésif thermoscellable (5) imprègne partiellement la feuille de papier (10) de façon à former une couche (10') qui fait face au film (1) et qui a une épaisseur non supérieure à 20 micromètres.

2. Procédé selon la revendication précédente, **caractérisé en ce que** l'adhésif thermoscellable liquide (5) est séché par un dispositif de chauffage (7) à une température comprise entre 30° et 160 °C.

3. Procédé selon l'une des revendications précédentes, **caractérisé en ce que** le film (1) et la feuille de papier (10) sont stratifiés sous une pression comprise entre 3 et 5 bars.

4. Procédé selon l'une des revendications précédentes, **caractérisé en ce que** le film (1) et la feuille de papier (10) sont stratifiés à une température comprise entre 80° et 140 °C.

5. Procédé selon l'une des revendications précédentes, **caractérisé en ce que** le film (1) doté de l'adhésif thermoscellable séché est enroulé sur un rouleau (3) avant d'être stratifié avec la feuille de papier (10).

6. Matériau stratifié (12) comprenant au moins un film (1) fait d'une matière plastique stratifié avec au moins une feuille de papier (10) par l'intermédiaire d'au moins une couche d'adhésif thermoscellable (5) agencée entre le film (1) et la feuille de papier (10), **caractérisé en ce que** l'adhésif thermoscellable (5) imprègne partiellement la feuille de papier (10) de façon à former une couche (10') qui fait face au film (1) et qui a une épaisseur non supérieure à 20 micromètres.

7. Procédé ou matériau stratifié (12) selon l'une des revendications précédentes, **caractérisé en ce que** la couche (10') d'adhésif thermoscellable (5) qui imprègne partiellement la feuille de papier (10) a une épaisseur non supérieure à 20 % de l'épaisseur totale de la feuille de papier (10).

8. Procédé ou matériau stratifié (12) selon l'une des revendications précédentes, **caractérisé en ce que** l'adhésif thermoscellable (5) est appliqué sur le film (1) en une quantité comprise entre 1 et 40 g/m², en particulier entre 1 et 10 g/m², à l'état liquide.

9. Procédé ou matériau stratifié (12) selon l'une des revendications précédentes, **caractérisé en ce que** l'adhésif thermoscellable (5) est une solution aqueuse.

10. Procédé ou matériau stratifié (12) selon l'une des revendications précédentes, **caractérisé en ce que** l'adhésif thermoscellable (5) est une solution aqueuse à base d'éthylène/acide acrylique.

11. Procédé ou matériau stratifié (12) selon l'une des revendications précédentes, **caractérisé en ce que** le film (1) est fait de polypropylène.

12. Procédé ou matériau stratifié (12) selon l'une des revendications précédentes, **caractérisé en ce que** le film (1) a une épaisseur comprise entre 10 et 200 micromètres, en particulier entre 20 et 30 micromètres.

13. Procédé ou matériau stratifié (12) selon l'une des revendications précédentes, **caractérisé en ce que** le grammage de la feuille de papier (10) est compris entre 10 et 200 g/m².
